# EUROPÄISCHE PATENTSCHRIFT

(11) **EP 0 507 342 B1**
(45) Veröffentlichungstag und Bekanntmachung des Hinweises auf die Patenterteilung: **02.11.1995**
(21) Anmeldenummer: 92105831.9
(22) Anmeldetag: 03.04.1992
(51) Int. Cl.: B62D 53/08

(54) **Sattelkupplung mit einer Schmiermittelversorgung für den Schlossbereich**
Fifth wheel traction coupling with a supply of grease for the locking zone
Sellette d'accouplement articulée avec un alimentation de lubrifiant pour la zone de serrure

(30) Priorität: 04.04.1991 DE 4110893
(43) Veröffentlichungstag der Anmeldung: 07.10.1992
(73) Patentinhaber: ROCKINGER Spezialfabrik für Anhängerkupplungen GmbH & Co., D-80904 München (DE)
(72) Erfinder: Schneider, Frank, Dipl.-Ing., W-8038 Gröbenzell (DE)
(74) Vertreter: Weickmann, Heinrich, Dipl.-Ing.

(56) Entgegenhaltungen:
- DE-A- 3 612 832
- FR-A- 2 555 110
- US-A- 4 541 651

## Beschreibung

Die Erfindung betrifft eine Sattelkupplung mit einer Schmiermittelversorgung für den Schloßbereich gemäß dem Oberbegriff des Anspruchs 1.

Eine derartige Sattelkupplung ist beispielsweise aus der FR-A-2 555 110 bekannt. Bei dieser Sattelkupplung ist an einer Sattelplatte eine entgegen der Zugrichtung offene Anlagefläche für einen zugehörigen Königszapfen vorgesehen. Zu dieser Anlagefläche führt ein vollständig in der Sattelplatte ausgebildetes Schmiermittelkanalsystem. Das Schmiermittelkanalsystem durchsetzt die Sattelplatte ausgehend von deren Unterseite schräg nach oben bis zur Anlagefläche für den Königszapfen. Die Einbringung des zur Ebene der Sattelplatte geneigt verlaufenden Schmiermittelkanals erfordert aufgrund dieser Neigung einen gesonderten Bearbeitungsschritt. Dieser zusätzliche Bearbeitungsschritt muß überdies an der schweren und somit umständlich zu handhabenden Sattelplatte ausgeführt werden. Insgesamt ergibt sich somit eine konstruktiv aufwendige Fertigung der bekannten Sattelkupplung mit Schmiermittelversorgung für den Schloßbereich.

Demgegenüber ist es Aufgabe der Erfindung, eine Sattelkupplung mit Schmiermittelversorgung für den Schloßbereich bereitzustellen, welche bei geringem konstruktivem Aufwand sowohl im Zugbetrieb als auch im Schubbetrieb eine ausreichende Schmierung des Königszapfens und der den Königszapfen in seiner Nachlaufstellung haltenden Teile sicherstellt.

Diese Aufgabe wird erfindungsgemäß durch eine Sattelkupplung mit den Merkmalen des Anspruchs 1 gelöst. Erfindungsgemäß verläuft das Schmiermittelkanalsystem zumindest teilweise durch den sich im wesentlichen orthogonal zur Ebene der Sattelplatte erstreckenden Schwenkbolzen für den Kupplungshaken. Dieser Schwenkbolzen ist ein verglichen mit der Sattelplatte leichtes und einfach zu handhabendes Teil. Neben der Funktion des schwenkbaren Halterns des Kupplungshakens hat der Schwenkbolzen ferner die Funktion, der Anlagefläche für den Königszapfen Schmiermittel zuzuführen. Als einfach zu handhabendes Teil mit Doppelfunktion eröffnet der Schwenkbolzen somit die Möglichkeit einfacher konstruktiver Fertigung der Sattelkupplung.

Das Schmiermittel tritt an der Anlagefläche aus und schmiert somit im Schubbetrieb die gegenseitigen Anlageflächen von Königszapfen und Sattelplatte zuverlässig. Infolge der Schwerkraft fließt das Schmiermittel zu dem unterhalb der Anlagefläche angeordneten Kupplungshaken. Hier schmiert es im Zugbetrieb die gegenseitigen Anlageflächen von Königszapfen und Kupplungshaken.

Aus der DE-A-36 12 832 ist eine Sattelkupplung bekannt, bei welcher ein im Schloßbereich vorgesehener Verschleißring an der mit dem Königszapfen in Berührung kommenden Anlagefläche Vertiefungen aufweist, in die reibungsminderndes Material eingelagert ist.

Das Schmierkanalsystem der Schmiermittelversorgung für den Schloßbereich der Sattelkupplung gemäß der US-A-4 541 651 verläuft durch den Königszapfen.

Bei der aus der AT 180 830 bekannten Sattelkupplung weist der Schließmechanismus einen von jenem der gattungsgemäßen Kupplung verschiedenen Aufbau auf. Gemäß der AT 180 830 wird der Kraftübertragungseingriff zwischen der zugfahrzeugseitigen Sattelplatte und der nachlauffahrzeugseitigen Aufliegerplatte hergestellt, indem ein in einem Gehäuse geführter Kupplungszapfen nach oben verschoben wird.

Die DE-A-37 28 090 schlägt zur Lösung des Problems der Reibung zwischen Sattelplatte und Königszapfen vor, das Sattelschloß zur Bildung eines den Königszapfen aufnehmenden Rollenlagers mit zwei diesen Königszapfen umgreifenden Schließbacken auszubilden.

Aus der DE-A-31 18 633 ist eine Schmiermittelversorgung für eine Auflagefläche zwischen einer an einem Zugfahrzeug angeordneten Sattelplatte und einer an einem Nachlauffahrzeug angeordneten Drehplatte bekannt. Diese bekannte Schmiermittelversorgung ist nicht in der Lage, den sowohl im Zugbetrieb als auch im Schubbetrieb starker Beanspruchung unterworfenen Schloßbereich der Sattelkupplung mit Schmiermittel zu versorgen.

Bevorzugt führt das erfindungsgemäße Schmiermittelkanalsystem im Schloßbereich der Sattelkupplung zielgerichtet Schmiermittel zu. Somit werden sämtliche Teile im Schloßbereich der Sattelkupplung, die beim Betrieb hoher Beanspruchung unterliegen, zuverlässig mit Schmiermittel versorgt.

Aus der erfindungsgemäßen Versorgung des Schloßbereichs mit Schmiermittel resultiert eine verminderte Abnutzung der Sattelkupplung im Schloßbereich. Darüber hinaus führt die Versorgung des Schloßbereichs der Sattelkupplung mit Schmiermittel zu erhöhtem Fahrkomfort. Zum einen wird durch die Schmierung des Schloßbereichs ein von einer Relativbewegung von Königszapfen und Anlagefläche bzw. Kupplungshaken herrührendes Rattern, beispielsweise beim Abbiegen oder Fahrt auf kurviger Strecke, weitgehend Vermieden. Zum anderen wirkt das Schmiermittel immer auch als Dämpfmittel, so daß Stöße des Königszapfens gegen Anlagefläche oder Kupplungshaken beim Abbremsen oder Beschleunigen des Zugfahrzeugs nicht so stark spürbar werden.

In einer Ausführungsform ist die Anlagefläche unmittelbar an der Sattelplatte ausgebildet und das Schmiermittelkanalsystem zumindest teilweise durch die Sattelplatte zu der Anlagefläche geführt. Bevorzugt ist es jedoch, daß die Anlagefläche an einem an der Sattelplatte eingesetzten Verschleißring ausgebildet ist und daß das Schmiermittelkanalsystem zumindest teilweise durch den Verschleißring zu der Anlagefläche geführt ist. In beiden Ausführungsformen kann das Schmiermittelkanalsystem in den ohnehin vorhandenen Bauelementen der Sattelkupplung vorgesehenen Durchgängen gebildet sein, wodurch der für die Bereitstellung des Schmiermittelkanalsystems erforderliche konstruktive Mehraufwand klein gehalten werden kann. In dem in der zweiten Ausführungsform vorgesehenen Verschleißring kann der entsprechende Durchgang auf besonders einfache Weise eingebracht werden, bspw. durch Bohren.

Ein weiterer Teilabschnitt des Schmiermittelkanalsystems kann mit geringem konstruktiven Aufwand bereitgestellt werden, indem das Schmiermittelkanalsystem durch den Schwenkbolzen zu der Sattelplatte bzw. dem Verschleißring und von dort weiter zu der Anlagefläche geführt ist.

In Weiterbildung der Erfindung wird vorgeschlagen, daß der Schwenkbolzen im Bereich seines oberen Endes an der Sattelplatte bzw. dem Verschleißring in mindestens einem Kontaktflächenpaar anliegt, daß ein innerhalb des Schwenkbolzens im wesentichen achsparallel oder achskoinzident verlaufender Schwenkbolzenkanal in eine schwenkbolzenseitige Kontaktfläche ausmündet und daß ein im wesentlichen radial durch die Sattelplatte bzw. den Verschleißring verlaufender Anschlußkanal radial außen in eine sattelplatten- bzw. verschleißringseitige Kontaktfläche des Kontaktflächenpaars ausmündet. Hierdurch wird ein direkter Übergang des Schmiermittels vom Schwenkbolzenkanal in den Anschlußkanal ermöglicht.

In einer Ausführungsform der Schmiermittelversorgung ist vorgesehen, daß der Schwenkbolzen an seinem oberen Ende einen Fortsatz besitzt, welcher eine zur Schwenkbolzenachse parallele schwenkbolzenseitige Kontaktfläche bildet und daß diese schwenkbolzenseitige Kontaktfläche an einem Teil einer radial äußeren Fläche eines schloßnahen Bereichs der Sattelplatte bzw. einer radial äußeren Fläche des Verschleißrings anliegt, wobei der achsparallel oder achskoinzident verlaufende Schwenkbolzenkanal in den Fortsatz hinein fortgesetzt ist und die achsparallele Kontaktfläche des Schwenkbolzens mündet, während der radial verlaufende Anschlußkanal in die radial äußere Umfangsfläche der Sattelplatte bzw. des Verschleißrings mündet. Durch die Anlage des Schwenkbolzenfortsatzes an der radial äußeren Umfangsfläche der Sattelplatte lbzw. des Verschleißrings kann eine Relativ-Verdrehung des Schwenkbolzens verhindert werden, so daß stets sichergestellt werden kann, daß der Schwenkbolzenkanal und der Anschlußkanal ineinander münden.

Hierbei ist es möglich, daß der achsparallel oder achskoinzident verlaufende Schwenkbolzenkanal die achsparallele Kontaktfläche des Schwenkbolzens anschneidet. Bei dieser Ausführungsform braucht zur Ausbildung des Schwenkbolzenkanals in dem Schwenkbolzen lediglich eine Bohrung angebracht zu werden.

Alternativ ist es jedoch auch möglich, daß von dem achsparallel oder achskoinzident verlaufenden Schwenkbolzenkanal im Fortsatz ein Querkanal abgezweigt ist, der in die achsparallele Kontaktfläche des Schwenkbolzens mündet. Diese Ausführungsform weist günstige Eigenschaften im Hinblick auf eine Abdichtung des Übergangsbereichs zwischen Schwenkbolzenkanal und Anschlußkanal auf.

Um zu verhindern, daß zwischen Schwenkbolzen und Verschleißring Schmiermittel austritt, wird vorgeschlagen, daß die achsparallele Kontaktfläche des Schwenkbolzens durch eine dauerelastische Dichtmasse gegen die radial äußere Fläche der Sattelplatte bzw. des Verschleißrings abgedichtet ist.

In einer weiteren Ausführungsform der Schmiermittelversorgung ist vorgesehen, daß an dem oberen Ende des Schwenkbolzens eine zu dessen Achse im wesentlichen normale Kontaktfläche ausgebildet ist und daß die Sattelplatte bzw. der Verschleißring eine zu ihrer bzw. seiner Achse im wesentlichen normale Kontaktfläche aufweist.

In Weiterbildung dieser weiteren Ausführungsform wird vorgeschlagen, daß von dem im wesentlichen radial verlaufenden Anschlußkanal ein Querkanal abgezweigt ist, welcher in die Kontaktfläche der Sattelplatte bzw. des Verschleißrings mündet.

Eine einfache Fertigung des Schwenkbolzens mit einer achsnormalen, planen Kontaktfläche kann unter Aufrechterhaltung der kreisrunden Form des Verschleißrings und der schon bisher üblichen Lage des Schwenkbolzens teilweise außerhalb des Umrisses des Verschleißrings in dieser Ausführungsform dadurch erfolgen, daß von dem Schwenkbolzenkanal im oberen Endbereich des Schwenkbolzens ein Schrägkanal abgezweigt ist, welcher in die zur Schwenkbolzenachse im wesentlichen normale Kontaktfläche des Schwenkbolzens mündet.

Um einen Austritt von Schmiermittel zwischen Schwenkbolzen und Verschleißring sicherzustellen, wird vorgeschlagen, daß zwischen die zur Schwenkbolzenachse normale Kontaktfläche des Schwenkbolzens und die zur Verschleißringsachse im wesentlichen achsnormale Kontaktfläche des Verschleißrings eine Dichtung eingespannt ist.

Um auch bei dieser Ausführungsform ein Verdrehen des Schwenkbolzens relativ zum Verschleißring zu verhindern, ist vorgesehen, daß der Schwenkbolzen einen über die achsnormale Kontaktfläche nach oben vorstehenden Fortsatz besitzt, welcher mit einer Drehsicherungsfläche an einer äußeren Umfangsfläche des Verschleißrings anliegt.

Eine besonders einfache Fertigung des Verschleißringkanals kann dadurch gewährleistet werden, daß der im wesentlichen radial verlaufende Verschleißringkanal bis zu einer radial äußeren Umfangsfläche des Verschleißrings fortgesetzt und dort durch ein Verschlußelement abgeschlossen ist.

In Weiterbildung der Erfindung wird vorgeschlagen, daß der Verschleißring in eine radial einwärts und nach oben offene Ringausnehmung der Sattelplatte eingelegt ist, mit seiner radial äußeren Umfangsfläche an einer radial inneren Umfangsfläche dieser Ringausnehmung anliegt, mit einer achsnormalen Auflagefläche auf dem Boden dieser Ringausnehmung aufliegt und daß ein oberer Endabschnitt des Schwenkbolzens in eine Ansenkung des Bodens der Ringausnehmung versenkt ist derart, daß zumindest ein innerhalb des Umrisses des Verschleißrings gelegener Teil des oberen Bolzenendes im wesentlichen bündig liegt mit der Bodenfläche der Ringausnehmung.

Ein über die Anlagefläche des Verschleißrings nach oben überstehender Fortsatz des Schwenkbolzens kann von einer radialen Erweiterung in der Umfangswand der Ringausnehmung aufgenommen sein, gleichgültig ob dieser Fortsatz nur der Drehsicherung des Schwenkbolzens oder auch der Bildung einer Kontaktfläche dient.

Um in einfacher Weise Schmiermittel in das Schmiermittelkanalsystem einleiten zu können, wird vorgeschlagen, daß am unteren Ende des Schwenkbolzens ein Anschluß für eine Zentralschmierungsleitung und/oder eine Schmiermittelpresse vorgesehen ist.

Hierbei ist besonders bevorzugt, daß die Schmiermittelversorgung Teil einer Zentral-Schmiermittelversorgung ist, die auch der Versorgung der Auflagefläche der Kupplungsplatte mit Schmiermittel dient.

Die Erfindung wird im folgenden an Hand der Zeichnung an Ausführungsbeispielen näher erläutert werden. Es stellen dar:
- Fig. 1: eine Draufsicht auf eine mit der erfindungsgemäßen Schmiermittelversorgung versehene Sattelplatte;
- Fig. 2: einen Schnitt entlang der Linie II-II in Fig. 1;
- Fig. 3: eine vergrößerte Ansicht des Details A in Fig. 2 einer ersten Ausführungsform der Schmiermittelversorgung;
- Fig. 4: eine perspektivische Teilansicht eines Schwenkbolzens dieser ersten Ausführungsform;
- Fig. 5: eine Ansicht analog Fig. 3 einer zweiten Ausführungsform;
- Fig. 6: eine Ansicht analog Fig. 4 dieser zweiten Ausführungsform; und
- Fig. 7: eine Ansicht analog den Fig. 3 und 5 einer weiteren Ausführungsform.

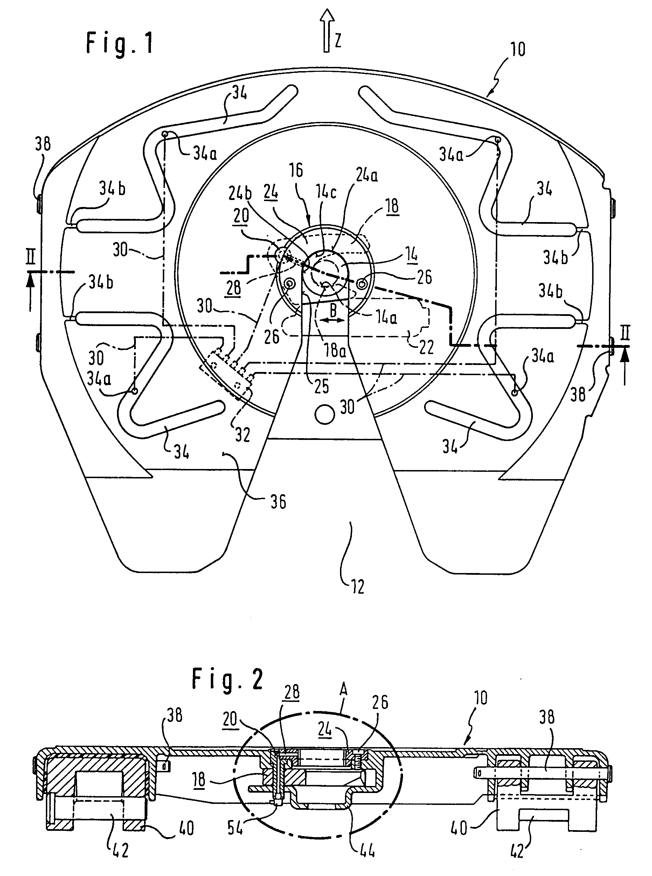

In Fig. 1 ist eine Sattelplatte allgemein mit 10 bezeichnet. Sie weist einen entgegen der Zugrichtung Z offenen Einführungsschlitz 12 auf für die Einführung eines mit einem Nachlauffahrzeug verbundenen Königszapfen 14 in den Schloßbereich 16 der Sattelkupplung. Der Königszapfen 14 wird durch einen Kupplungshaken 18 (in Fig. 1 teilweise gestrichelt dargestellt) in seiner Nachlaufstellung gemäß Fig. 1 gehalten. Der Kupplungshaken 18 ist um einen Schwenkbolzen 20 verschwenkbar gelagert und durch ein in Richtung des Pfeils B bewegbares Sperrstück 22 in seiner in Fig. 1 dargestellten Sperrstellung gehalten, in welcher es den Königszapfen 14 in seiner Nachlaufstellung sichert.

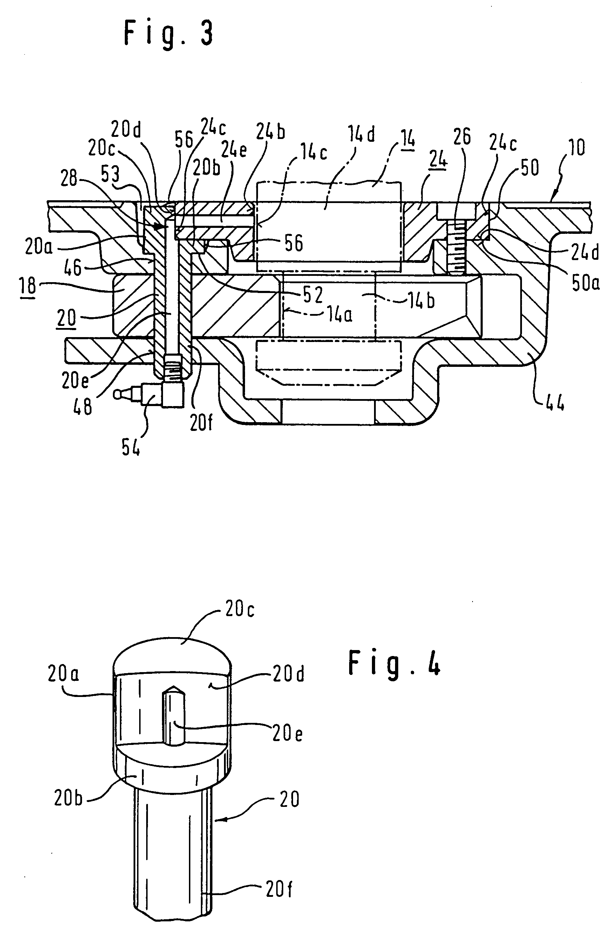

Wird die Sattelplatte im Zugbetrieb relativ zum Königszapfen 14 in Zugrichtung Z bewegt, so liegt der Kupplungshaken 18 mit einer Anlagefläche 18a kraftübertragend an der äußeren Umfangsfläche 14a eines ersten Längenabschnitts 14b (siehe Fig. 3) des Königszapfens 14 an. Im Schubbetrieb liegt der Königszapfen 14 mit der äußeren Umfangsfläche 14c eines zweiten Längenabschnitts 14d (siehe Fig. 3) an einem Flächenabschnitt 24a eines Verschleißrings 24 kraftübertragend an. Der Verschleißring 24 weist eine entgegen der Zugrichtung Z gerichtete Öffnung 25 auf und ist durch Schraubbolzen 26 an der Sattelplatte 10 befestigt.

Infolge der kraftübertragenden Anlage des Königszapfens 14 am Kupplungshaken 18 bzw. Verschleißring 24 im Zugbetrieb bzw. im Schubbetrieb unterliegen die Umfangsflächen 14a und 14c des Königszapfen 14 sowie die Flächenabschnitte 18a und 24a des Kupplungshakens 18 bzw. Verschleißrings 24 besonderer Beanspruchung und somit erhöhter Abnutzung. Es ist daher erforderlich, die vorstehend genannten Flächenabschnitte ausreichend mit Schmiermittel zu versorgen.

Hierzu wird durch ein Schmiermittelkanalsystem 28 Schmiermittel zur inneren Umfangsfläche 24b des Verschleißrings 24 geleitet. Das Schmiermittel verteilt sich hier durch die im Betrieb auftretenden Relativbewegungen des Königszapfens 14 und der Sattelplatte 10 im gesamten, besonderer Beanspruchung unterworfenen Flächenabschnitt 24a des Verschleißrings 24 und auf der äußeren Umfangsfläche 14a des Königszapfens 14. Infolge der Schwerkraft läuft das Schmiermittel nach unten ab und trifft (vgl. Fig. 2) auf den Kupplungshaken 18, wo es sich ebenfalls durch die Relativbewegungen von Königszapfen 14 und Sattelplatte 10 auf der Anlagefläche 18a und der äußeren Umfangsfläche 14c des Königszapfens 14 verteilt. Somit werden auch diese besonderer Beanspruchung unterworfenen Bereiche des Schloßbereichs 16 der Sattelkupplung stets ausreichend mit Schmiermittel versorgt.

Die Versorgung des Schloßbereichs 16 der Sattelkupplung mit Schmiermittel hat einen erhöhten Fahrkomfort zur Folge. Durch die Schmierung des Schloßbereichs 16 gleitet der Königszapfen 14 beispielsweise beim Abbiegen oder bei Fahrt auf kurviger Strecke, ohne zu rattern, am Verschleißring 24 bzw. am Kupplungshaken 18. Daneben wirkt das Schmiermittel immer auch als Dämpfmittel, so daß Stöße des Königszapfens 14 gegen den Verschleißring 24 oder den Kupplungshaken 18 beim Abbremsen oder Beschleunigen des Zugfahrzeugs nicht so stark spürbar werden.

Das Schmiermittelkanalsystem 28 ist an eine Schmiermittelzufuhrleitung 30 angeschlossen, welche mit einer unter der Sattelplatte 10 angeordneten Zentralschmiermittelversorgung 32 verbunden ist. Weitere von der Zentralschmiermittelversorgung 32 ausgehende Schmiermittelzufuhrleitungen 30 führen zu Schmiermittelzuflußbohrungen 34a von Schmiernuten 34. Die Schmiernuten 34 verlaufen wellenzugförmig und sind in einer teilringförmigen Auflagefläche 36 für eine nicht dargestellte Drehplatte des Nachlauffahrzeugs angeordnet. Durch die Wellenzugform der Schmiernuten 34 kann eine im wesentlichen gleichförmige Schmierung der gesamten Auflagefläche 36 gewährleistet werden. Überschüssiges Schmiermittel kann aus den Schmiernuten 34 an Nutfortsätzen 34b austreten, welche einen gegenüber dem Nutquerschnitt verringerten Querschnitt aufweisen.

In Fig. 2 ist eine Schnittansicht der Sattelplatte 10 dargestellt. Die Sattelplatte 10 ist durch Befestigungsbolzen 38 an Lagerböcken 40 befestigt, welche ihrerseits mittels Bolzen 42 an einem nicht dargestellten Sockel verkippbar gehaltert sind.

Fig. 3 zeigt das Detail A aus Fig. 2 einer ersten Ausführungsform der Schmiermittelversorgung in vergrößertem Maßstab, wobei der Königszapfen 14 in seiner Nachlaufstellung strichpunktiert eingezeichnet ist.

Wie bereits vorstehend erwähnt, wird der Königszapfen 14 durch den Kupplungshaken 18 in seiner Nachlaufstellung gehalten. Der Kupplungshaken 18 ist von einem Schwenkbolzen 20 verschwenkbar gehaltert und zwischen der Sattelplatte 10 und einem mit dieser einstückig ausgebildeten Ansatz 44 geführt. Der Schwenkbolzen durchsetzt eine Bohrung 46 in der Sattelplatte 10 sowie eine Bohrung 48 im Ansatz 44. Der Schwenkbolzen 20 ist durch den Verschleißring 24 in seiner Einbaustellung gesichert. Der Verschleißring 24 ist durch Schraubbolzen 26, von denen in Fig. 3 lediglich einer dargestellt ist, mit der Sattelplatte 10 verschraubt. Der Verschleißring 24 ist in eine radial einwärts und nach oben offene Ringausnehmung 50 der Sattelplatte 10 eingesetzt und liegt mit seinem äußeren Umfangsrand 24c am inneren Umfangsrand der Ringausnehmung 50 an. Mit einer zur Ringachse im wesentlichen senkrecht verlaufenden, ebenen Auflagefläche 24d liegt der Verschleißring 24 plan auf dem Boden 50a der Ringausnehmung 50 auf.

Ein Kopfabschnitt 20a des Schwenkbolzens 20 ist in eine Ansenkung 52 der Ringausnehmung 50 derart eingesetzt, daß der innerhalb des Umrisses des Verschleißrings 24 gelegene Teil 20b des Kopfabschnitts 20a des Schwenkbolzens 20 bündig mit der Bodenfläche 50a der Ringausnehmung 50 abschließt. Ein Fortsatz 20c des Kopfteils 20a des Schwenkbolzens 20 überragt die Bodenfläche 50a der Ringausnehmung 50 und liegt mit einer zur Schwenkbolzenachse im wesentlichen parallelen Kontaktfläche 20d am äußeren Umfangsrand 24c des Verschleißrings 24 an. Der Kopfabschnitt 20a ist in einer radialen Erweiterung 53 in der Umfangswand der Ringausnehmung 50 aufgenommen, so daß er nicht über die Sattelplatte 10 hinausragt.

Eine im wesentlichen parallel zur Schwenkbolzenachse verlaufende Bohrung 20e erstreckt sich vom in Fig. 3 unteren Ende des Bolzenschafts 20f bis in den Kopfabschnitt 20a des Schwenkbolzens 20 hinein und schneidet die Kontaktfläche 20d des Schwenkbolzens 20 an (vgl. auch Fig. 4). Die Bohrung 20e bildet den Schwenkbolzenkanal. Der Verschleißring 24 wird von seiner inneren Umfangsfläche 24b zu seiner äußeren Umfangsfläche 24c von einer Radialbohrung 24e durchsetzt. Der Verschleißringkanal 24e bildet den Anschlußkanal. Im montierten Zustand gemäß Fig. 3 mündet der Verschleißringkanal 24e in den Schwenkbolzenkanal 20e. Der Verschleißringkanal 24e und der Schwenkbolzenkanal 20e bilden zusammen das Schmiermittelkanalsystem 28.

Um dem Schmiermittelkanalsystem 28 Schmiermittel zuführen zu können, ist am unteren Ende des Schwenkbolzenschafts 20f ein Anschlußstück 54 angeordnet, an welches beispielsweise eine der Schmiermittelzuführleitungen 30 und/oder eine Schmiermittelpresse angeschlossen werden kann. Das zugeführte Schmiermittel wird durch das Anschlußstück 54 in den Schwenkbolzenkanal 20e, durch diesen zum Verschleißringkanal 24e und weiter zur inneren Umfangsfläche 24b des Verschleißrings 24 geleitet. Um ein Austreten von Schmiermittel beim Übergang vom Schwenkbolzenkanal 20e zum Verschleißringkanal 24e zu verhindern, sind der Schwenkbolzen 20 und Verschleißring 24 durch eine dauerelastische Dichtmasse 56 abgedichtet.

Nach dem Austritt aus dem Verschleißringkanal 24e verteilt sich das Schmiermittel infolge der beim Betrieb auftretenden Relativbewegungen des Königszapfens 14 relativ zur Sattelplatte 10 zwischen der inneren Umfangsfläche 24b des Verschleißrings 24 und der äußeren Umfangsfläche 14c des zweiten Längenabschnitts 14d des Königszapfens 14. Infolge der Schwerkraft läuft das Schmiermittel nach unten ab und gelangt zum Kupplungshaken 18, wo es sich zwischen dem Flächenabschnitt 18a des Kupplungshakens 18 und der äußeren Umfangsfläche 14a des ersten Längenabschnitts 14b des Königszapfens 14 verteilt, wodurch auch in diesem Bereich für eine zuverlässige Schmierung gesorgt ist.

In Fig. 4 ist eine perspektivische Teilansicht des Schwenkbolzens 20 dargestellt. Der obere Fortsatz 20c des Schwenkbolzens 20 ist durch Anfräsen des Kopfteils 20a entlang einer dem äußeren Umfangsrand 24c des Verschleißrings 24 entsprechenden Kontur gebildet und hat daher in der Draufsicht, d.h. entlang der Schwenkbolzenachse gesehen, einen halbmond-förmigen Querschnitt. In dem in Fig. 3 dargestellten zusammengesetzten Zustand verlindert die Anlage der Kontaktfläche 20d des Schwenkbolzens 20 am äußeren Umfangsrand 24c des Verschleißrings 24 ein Verdrehen des Schwenkbolzens 20 um seine Achse.

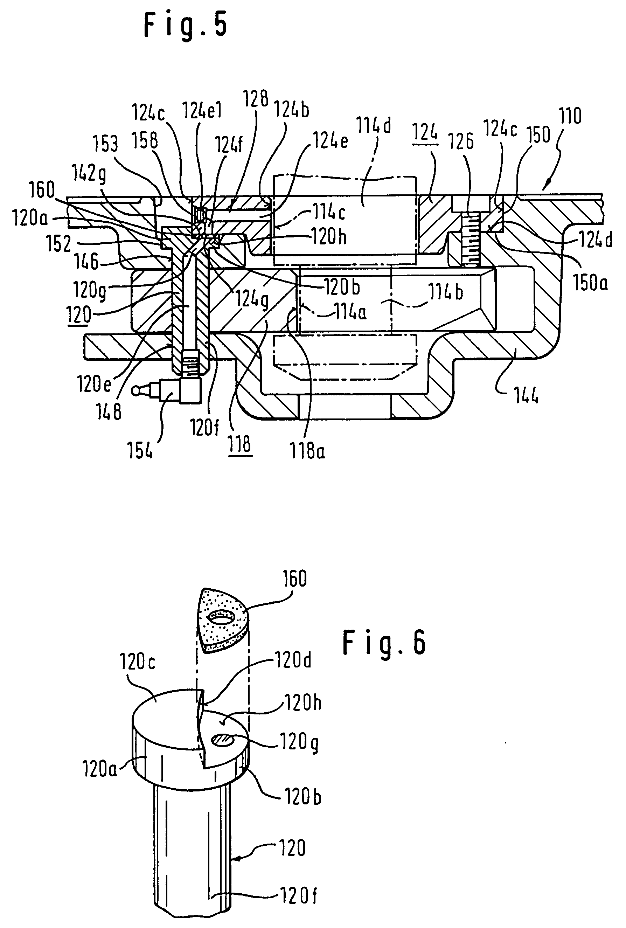

In Fig. 5 ist ein zweites Ausführungsbeispiel der Schmiermittelversorgung für den Schloßbereich einer Sattelkupplung dargestellt, welches im wesentlichen dem Ausführungsbeispiel gemäß Fig. 3 entspricht. Analoge Teile sind daher mit gleichen Bezugszeichen versehen wie in Fig. 3, jedoch vermehrt um die Zahl 100.

Auch bei diesem Ausführungsbeispiel durchsetzt der Schwenkbolzen 120 mit seinem Schaft 120f eine Bohrung 146 in der Sattelplatte 110 und eine Bohrung 148 in einem mit der Sattelplatte 110 einstückig ausgebildeten Ansatz 144. Mit seinem Kopfabschnitt 120a ist der Schwenkbolzen 120 in eine Ansenkung 152 der Ringausnehmung 150 eingesetzt. Der Schwenkbolzen 120 wird durch den Verschleißring 124 in seiner Stellung gesichert, welcher mittels Schraubbolzen 126 mit der Sattelplatte 110 verschraubt ist.

Eine vom unteren Ende des Schwenkbolzenschafts 120f ausgehende Bohrung 120e erstreckt sich im wesentlichen durch den gesamten Schwenkbolzenschaft 120f. Eine vom kopfseitigen Ende der Bohrung 120e ausgehende Schrägbohrung 120g verbindet die Bohrung 120e mit einer im wesentlichen senkrecht zur Schwenkbolzenachse verlaufenden Kontaktfläche 120h. Die Bohrungen 120e und 120g bilden zusammen den Schwenkbolzenkanal.

Im Verschleißring 124 führt eine Radialbohrung 124e radial auswärts bis zu einer Querbohrung 124f, welche die Radialbohrung 124e mit einer zur Verschleißringachse im wesentlichen senkrecht verlaufenden Kontaktfläche 124g verbindet. Die Bohrungen 124e und 124f bilden zusammen den Verschleißringkanal

Das Schmiermittelkanalsystem 128 wird somit in diesem Ausführungsbeispiel von der Bohrung 120e und der Schrägbohrung 120g des Schwenkbolzens 120 sowie von der Querbohrung 124f und der Radialbohrung 124e des Verschleißrings 124 gebildet. Zur einfachen Fertigung der sich nicht vollständig bis zur äußeren Umfangsfläche 124c des Verschleißrings 124 erstreckenden Radialbohrung 124e kann ein zunächst bis zur äußeren Umfangsfläche 124c verlaufender Teilabschnitt 124e1 der Radialbohrung 124e durch ein Verschlußelement 158 verschlossen werden. Dieses Verschlußelement 158 beispielsweise von einem Expanderverschluß gebildet sein, der Abschnitt 124e1 kann jedoch auch zugeschweißt werden.

Um im Betrieb einen Austritt von Schmiermittel beim Übergang vom Schwenkbolzen 120 zum Verschleißring 124 zu verhindern, kann zwischen die gegeneinanderliegenden Kontaktflächen 120h des Schwenkbolzens 120 und 124g des Verschleißrings 124 ein Dichtungselement 160 eingesetzt sein, welches eine der Kontaktfläche 120h entsprechende Gestalt aufweist.

Die Verteilung des Schmiermittels zwischen der inneren Umfangsfläche 124b des Verschleißrings 124 und dem äußeren Umfangsrand 114c des zweiten Längenabschnitts 114d des Königszapfens 114 sowie zwischen dem Flächenabschnitt 118a des Kupplungshakens 118 und dem äußeren Umfangsrand 114a des ersten Langenabschnitts 114b des Königszapfens 114 erfolgt in der gleichen Weise wie dies bereits vorstehend an Hand von Fig. 3 erläutert worden ist.

Auch in diesem Ausführungsbeispiel kann das Schmiermittel von einer Zentralschmiermittelversorgung oder einer Schmiermittelpresse über ein Anschlußstück 154 in das Schmiermittelkanalsystem 128 eingeführt werden.

In Fig. 6 ist eine perspektivische Teilansicht des Schwenkbolzens 120 dargestellt. Der obere Fortsatz 120c des Schwenkbolzens 120 ist, wie bereits beim Schwenkbolzen 20 erwähnt wurde, durch Anfräsen des Kopfteils 120a entlang einer dem äußeren Umfangsrand 124c des Verschleißrings 124 entsprechenden Kontur gebildet und hat daher im Querschnitt ebenfalls die Form eines Halbmonds. In dem in Fig. 5 dargestellten zusammengesetzten Zustand wirkt die durch das Fräsen gebildete Fläche 120d des Schwenkbolzens 120 durch ihre Anlage am äußeren Umfangsrand 124c des Verschleißrings 124 als Verdrehschutz für den Schwenkbolzen 120.

Zur Schmierung des Bereichs zwischen der äußeren Umfangsfläche des Schwenkbolzenschafts 20f bzw. 120f und dem Kupplungshaken 18 bzw 118 ist es grundsätzlich möglich, den Schwenkbolzen 20 bzw. 120 mit einer von der Bohrung 20e bzw. 120e ausgehenden Radialbohrung zu versehen. Jedoch gelangt das Schmiermittel auch infolge der Schwerkraft ausgehend von der Radialbohrung 24e bzw. 124e des Verschleißrings 24 bzw. 124 in den genannten Bereich und sorgt auch hier für zuverlässige Schmierung.

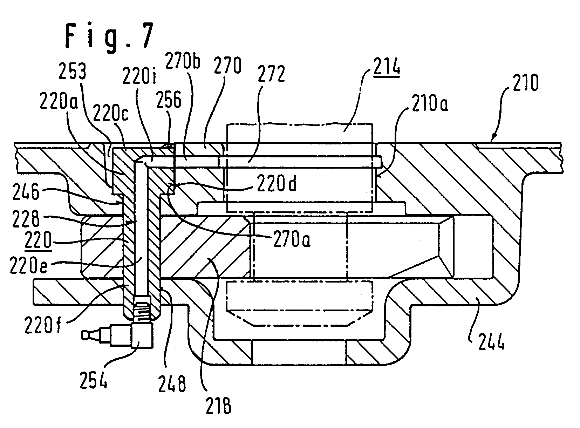

In Fig. 7 ist ein weiteres Ausführungsbeispiel einer erfindungsgemäßen Sattelkupplung mit einer Schmiermittelversorgung für den Schloßbereich der Sattelkupplung dargestellt, welches im wesentlichen dem Ausführungsbeispiel gemäß Fig. 3 entspricht. Analoge Teile sind daher mit gleichen Bezugszeichen versehen wie in Fig. 3, jedoch vermehrt um die Zahl 200.

Die Ausführungsform gemäß Fig. 7 unterscheidet sich von der Ausführungsform gemäß Fig. 3 zum einen dadurch, daß in die Sattelplatte 210 kein Verschleißring eingelegt ist, und zum anderen durch die spezielle Führung des Schmiermittelkanalsystems durch den Schwenkbolzen 220 und einen die Anlagefläche 210a für den Kupplungszapfen 214 umgebenden Bereich 270 der Sattelplatte 210.

In der Sattelplatte 210 und einem mit der Sattelplatte 210 einstück ausgebildeten Ansatz 244 sind Bohrungen 246 bzw. 248 ausgebildet, durch welche der Schaft 220f des Schwenkbolzens 220 in die Sattelplatte 210 eingesetzt werden kann. In der Stellung gemäß Fig. 7 ist der Kopfabschnitt 220a des Schwenkbolzens 220 in einer Ausnehmung 253 in der Sattelplatte 210 aufgenommen.

Im Schaft 220f des Schwenkbolzens 220 ist eine im wesentlichen parallel zur Schwenkbolzenachse verlaufende Bohrung 220e ausgebildet, die sich bis in den Kopfabschnitt 220a des Schwenkbolzens 220 erstreckt. Von der Kontaktfläche 220d des Schwenkbolzens 220, welche einer Kontaktfläche 270a des Sattelplattenbereichs 270 gegenüberliegt, verläuft eine Querbohrung 220i in den Kopfabschnitt 220a des Schwenkbolzens hinein und trifft in diesem mit der Längsbohrung 220e zusammen. Die Kontaktfläche 270a des Sattelplattenbereichs 270 ist mit der Anlagefläche 210a für den Kupplungszapfen 214 durch eine Bohrung 270b verbunden, welche in diesem Ausführungsbeispiel den Anschlußkanal bildet. In der Anlagefläche 210a für den Königszapfen 214 ist eine Schmiermittelnut 272 ausgebildet, welche zur gleichmäßigeren Verteilung des Schmiermittels auf der Anlagefläche 210a beiträgt.

Die Längsbohrung 220e, die Querbohrung 220i und der Anschlußkanal 270b bilden zusammen das Schmiermittelkanalsystem 228. Um dem Schmiermittelkanalsystem 228 Schmiermittel zuführen zu können, ist am unteren Ende des Schwenkbolzenschafts 220f ein Anschlußstück 254 angeordnet, an welches beispielsweise eine der Schmiermittelzuführleitungen und/oder eine Schmiermittelpresse angeschlossen werden kann. Um ein Austreten von Schmiermittel beim Übergang von der Querbohrung 220i zum Anschlußkanal 270b verhindern zu können, sind der Schwenkbolzen 220 und der Sattelkupplungsbereich 270 durch eine dauerelastische Dichtmasse 256 abgedichtet.

Eine der Schmiermittelnut 272 entsprechende Nut kann auch in den Ausführungsbeispielen gemäß den Fig. 3 und 5 vorgesehen sein. Auch ist es denkbar, einen gemäß Fig. 7 ausgebildeten Schwenkbolzen bei einer Sattelplatte mit Verschleißring zu verwenden.

## Patentansprüche

1. Sattelkupplung mit einer Schmiermittelversorgung für den Schloßbereich (16), bei welcher an einer Sattelplatte (10;110;210) eine entgegen der Zugrichtung (Z) offene Anlagefläche (24b;124b;210a) für einen zugehörigen Königszapfen (14;214) vorgesehen ist,
wobei ein Schmiermittelkanal-System (28;128;228) zu der Anlagefläche (24b;124b;210a) führt,
**dadurch gekennzeichnet**,
daß unterhalb der Anlagefläche (24b;124b;210a) ein Kupplungshaken (18;118;218) um einen Schwenkbolzen (20;120;220) schwenkbar gelagert ist, und
daß das Schmiermittelkanal-System (28;128;228) durch den Schwenkbolzen (20;120;220) zu der Anlagefläche (24b;124;210a) geführt ist.

2. Sattelkupplung nach Anspruch 1,
**dadurch gekennzeichnet**,
daß das Schmiermittelkanal-System (28) zielgerichtet ist.

3. Sattelkupplung nach Anspruch 1 oder 2,
**dadurch gekennzeichnet**,
daß die Anlagefläche (210a;310a) unmittelbar an der Sattelplatte (210;310) ausgebildet ist und
daß das Schmiermittelkanal-System (228;328) zumindest teilweise durch die Sattelplatte (210;310) zu der Anlagefläche (210a;310a) geführt ist.

4. Sattelkupplung nach Anspruch 1 oder 2,
**dadurch gekennzeichnet**,
daß die Anlagefläche (24b;124b) an einem an der Sattelplatte (10;110) eingesetzten Verschleißring (24;124) ausgebildet ist und
daß das Schmiermittelkanal-System (28;128) zumindest teilweise durch den Verschleißring (24;124) zu der Anlagefläche (24b;124b) geführt ist.

5. Sattelkupplung nach einem der Ansprüche 1 bis 4,
**dadurch gekennzeichnet**,
daß das Schmiermittelkanal-System (28;128;228) durch den Schwenkbolzen (20;120;220) zu der Sattelplatte (210) bzw. zu dem Verschleißring (24;124) und von dort weiter zu der Anlagefläche (24b;124;210a) geführt ist.

6. Sattelkupplung nach Anspruch 5,
**dadurch gekennzeichnet**,
daß der Schwenkbolzen (20;120;220) im Bereich seines oberen Endes (20a;120a;220a) an der Sattelplatte (210) bzw. dem Verschleißring (24;124) in mindestens einem Kontaktflächenpaar (20d,24c;120h, 124g;220d,270a) anliegt, daß ein innerhalb des Schwenkbolzens (20;120;220) im wesentlichen achsparallel oder achskoinzident verlaufender Schwenkbolzenkanal (20e;120e,120g;220e,220i) in eine schwenkbolzenseitige Kontaktfläche (20d;120h;220d) ausmündet und daß ein im wesentlichen radial durch die Sattelplatte (210) bzw. den Verschleißring (24;124) verlaufender Anschlußkanal (24e;124e,124f;270b) radial außen in eine sattelplatten- bzw. verschleißringseitige Kontaktfläche (24c;124g;270a) des Kontaktflächenpaars (20d,24c;120h,124g;220d,270a) ausmündet.

7. Sattelkupplung nach Anspruch 6,
**dadurch gekennzeichnet**,
daß der Schwenkbolzen (20;220) an seinem oberen Ende (20a;220a) einen Fortsatz (20c;220c) besitzt, welcher eine zur Schwenkbolzenachse parallele schwenkbolzenseitige Kontaktfläche (20d;220d) bildet und daß diese schwenkbolzenseitige Kontaktfläche (20d;220d) an einem Teil einer radial äußeren Fläche (24c;270a) eines schloßnahen Bereichs (270) der Sattelplatte (210) bzw. einer radial äußeren Fläche des Verschleißrings (24) anliegt, wobei der achsparallel oder achskoinzident verlaufende Schwenkbolzenkanal (20e;220e,220i) in den Fortsatz (20c; 220c) hinein fortgesetzt ist und in die achsparallele Kontaktfläche (20d;220d) des Schwenkbolzens (20;220) mündet, während der radial verlaufende Anschlußkanal (24e;270b) in die radial äußere Umfangsfläche (24c; 270a) des schloßnahen Bereichs (270) der Sattelplatte (210) bzw. des Verschleißrings (24) mündet.

8. Sattelkupplung nach Anspruch 7,
**dadurch gekennzeichnet**,
daß der achsparallel oder achskoinzident verlaufende Schwenkbolzenkanal (20e) die achsparallele Kontaktfläche (20d) des Schwenkbolzens (20) anschneidet.

9. Sattelkupplung nach Anspruch 7,
**dadurch gekennzeichnet**,
daß vom dem achsparallel oder achskoinzident verlaufenden Schwenkbolzenkanal (220e) im Fortsatz (220c) ein Querkanal abzweigt, der in die achsparallele Kontaktfläche (220d) des Schwenkbolzens (220) mündet.

10. Sattelkupplung nach einem der Ansprüche 7 bis 9,
**dadurch gekennzeichnet**,
daß die achsparallele Kontaktfläche (20d;220d) des Schwenkbolzens (20;220) durch eine dauerelastische Dichtmasse (56;256) gegen die radial äußere Umfangsfläche (24c;270a) des schloßnahen Bereichs (270) der Sattelplatte (210) bzw. des Verschleißrings (24) abgedichtet ist.

11. Sattelkupplung nach Anspruch 6,
**dadurch gekennzeichnet**,
daß an dem oberen Ende (120a) des Schwenkbolzens (120) eine zu dessen Achse im wesentlichen normale Kontaktfläche (120h) ausgebildet ist und daß die Sattelplatte bzw. der Verschleißring (124) eine zu seiner Achse im wesentlichen normale Kontaktfläche (124g) aufweist.

12. Sattelkupplung nach Anspruch 11,
**dadurch gekennzeichnet**,
daß von dem im wesentlichen radial verlaufenden Anschlußkanal (124e) ein Querkanal (124f) abgezweigt ist, welcher in die Kontaktfläche (124g) der Sattelplatte bzw. des Verschleißrings (124) mündet.

13. Sattelkupplung nach einem der Ansprüche 11 oder 12,
**dadurch gekennzeichnet**,
daß von dem Schwenkbolzenkanal (120e) im oberen Endbereich (120a) des Schwenkbolzens (120) ein Schrägkanal (120g) abgezweigt ist, welcher in die zur Schwenkbolzenachse im wesentlichen normale Kontaktfläche (120h) des Schwenkbolzens (120) mündet.

14. Sattelkupplung nach einem der Ansprüche 11 bis 13,
**dadurch gekennzeichnet**,
daß zwischen die zur Schwenkbolzenachse normale Kontaktfläche (120h) des Schwenkbolzens (120) und die zur Sattelplattenachse bzw. Verschleißringsachse im wesentlichen achsnormale Kontaktfläche (124g) der Sattelplatte bzw. des Verschleißrings (124) eine Dichtung (160) eingespannt ist.

15. Sattelkupplung nach einem der Ansprüche 11 bis 14,
**dadurch gekennzeichnet**,
daß der Schwenkbolzen (120) einen über die achsnormale Kontaktfläche (120h) nach oben vorstehenden Fortsatz (120c) besitzt, welcher mit einer Drehsicherungsfläche (120d) an einer äußeren Umfangsfläche (124c) der Sattelplatte bzw. des Verschleißrings (124) anliegt.

16. Sattelkupplung nach einem der Ansprüche 11 bis 15,
**dadurch gekennzeichnet**,
daß der im wesentlichen radial verlaufende Anschlußkanal (124e) bis zu einer radial äußeren Umfangsfläche (124c) der Sattelplatte bzw. des Verschleißrings (124) fortgesetzt und dort durch ein Verschlußelement (158) abgeschlossen ist.

17. Sattelkupplung nach einem der Ansprüche 4 bis 16,
**dadurch gekennzeichnet**,
daß der Verschleißring (24;124) in eine radial einwärts und nach oben offene Ringausnehmung (50;150) der Sattelplatte (10;110) eingelegt ist, mit einer radial äußeren Umfangsfläche (24c;124c) an einer radial inneren Umfangsfläche dieser Ringausnehmung (50;150) anliegt, mit einer achsnormalen Auflagefläche (24d;124d) auf dem Boden (50a;150a) dieser Ringausnehmung (50;150) aufliegt und daß ein oberer Endabschnitt (20a;120a) des Schwenkbolzens (20;120) in eine Ansenkung (52;152) des Bodens (50a;150a) der Ringausnehmung (50;150) versenkt ist derart, daß zumindest ein innerhalb des Umrisses des Verschleißrings (24;124) gelegener Teil (20b;120b) des oberen Bolzenendes (20a;120a) im wesentlichen bündig liegt mit der Bodenfläche (50a;150a) der Ringausnehmung (50;150).

18. Sattelkupplung nach Anspruch 17,
**dadurch gekennzeichnet**,
daß ein über die Anlagefläche (24d;124d) des Verschleißrings (24;124) nach oben überstehender Fortsatz (20c;120c) des Schwenkbolzens (20;120) von einer radialen Erweiterung (53;153) in der Umfangswand der Ringausnehmung (50;150) aufgenommen ist.

19. Sattelkupplung nach einem der Ansprüche 1 bis 18,
**dadurch gekennzeichnet**,
daß am unteren Ende des Schwenkbolzens (20;120) ein Anschluß (54;154) für eine Zentralschmierungsleitung (30) und/oder eine Schmiermittelpresse vorgesehen ist.

20. Sattelkupplung nach einem der Ansprüche 1 bis 19,
**dadurch gekennzeichnet**,
daß die Schmiermittelversorgung Teil einer Zentral-Schmiermittelversorgung (32) ist, die auch der Versorgung der Auflagefläche (36) der Sattelplatte (10;110) mit Schmiermittel dient.

## Claims

1. A semi-trailer coupling with a lubricant supply for the lock region (16), in which an abutment surface (24b;124b;210a), which is open counter to the towing direction, is provided on a semi-trailer plate (10;110;210) for an associated king-pin (14;214), wherein a lubricant duct system (28;128;228) leads to the abutment surface (24b;124b;210a), characterised in that below the abutment surface (24b;124b;210a) a coupling hook (18;118;218) is pivotably mounted about a pivot pin (20;120;220), and in that the lubricant duct system (28;128;228) leads through the pivot pin (20;120;220) to the abutment surface (24b;124b; 210a).

2. A semi- trailer coupling according to Claim 1, characterised in that the lubricant duct system (28) is specifically directed.

3. A semi- trailer coupling according to claim 1 or 2, characterised in that the abutment surface (210a;310a) is formed directly on the trailer plate (210;310), and in that the lubricant duct system (228;328) is directed at least partly through the trailer plate (210;310) to the abutment surface (210a;310a).

4. A semi- trailer coupling according to Claim 1 or 2, characterised in that the abutment surface (24b;124b) is formed on a wearing ring (24;124) inserted in the semi-trailer plate (10;110), and in that the lubricant duct system (28;128) is directed at least partly through the wearing ring (24;124) to the abutment surface (24b;124b).

5. A semi- trailer coupling according to any of Claims 1 to 4, characterised in that the lubricant duct system (28;128;228) is directed through the pivot pin (20;120;220) to the trailer plate (210) or to the wearing ring (24;124) and from there to the abutment surface (24b;124;210a).

6. A semi- trailer coupling according to Claim 5, characterised in that in the vicinity of its upper end (20a;120a;220a) the pivot pin (20;120;220) abuts against the semi-trailer plate (210) or the wearing ring (24;124) at at least one pair of contact surfaces (20d,24c;120h,124g;220d, 270a), in that a pivot pin duct (20e;120e,120g;220e,220i) extending substantially axially parallel or coaxially inside the pivot pin (20;120;220) discharges on to a contact surface (20d;120h;220d) on the pivot pin side, and in that a connecting duct (24e;124e,124f;270b) extending substantially radially through the semi-trailer plate (210) or the wearing ring (24;124) discharges radially outwards on to a contact surface (24c;124g;270a) of the pair of contact surfaces (20d,24c; 120h,124g;220d,270a) on the semi-trailer plate side or wearing ring side.

7. A semi- trailer coupling according to Claim 6, characterised in that at its upper end (20a;220a) the pivot pin (20;220) has an extension (20c;220c) which forms a contact surface (20d;220d) parallel to the pivot pin axis on the pivot pin side, and in that this contact surface (20d;220d) on the pivot pin side abuts against one part of a radially outer surface (24c;270a) of a region (270) of the semi-trailer plate (210) near the lock or of a radially outer surface of the wearing ring (24), wherein the pivot pin duct (20e;220e,220i) extending axially parallel or coaxially is extended into the extension (20c;220c) and discharges on to the axially parallel contact surface (20d;220d) of the pivot pin (20;220), whereas the radially extending connecting duct (24e;270b) discharges on to the radially outer circumferential surface (24c;270a) of the region (270) of the semi-trailer plate (210) near the lock or of the wearing ring (24).

8. A semi- trailer coupling according to Claim 7, characterised in that the axially parallel or coaxially extending pivot pin duct (20e) intersects the axially parallel contact surface (20d) of the pivot pin (20).

9. A semi- trailer coupling according to Claim 7, characterised in that a transverse duct, which discharges into the axially parallel contact surface (220d) of the pivot pin (220), branches off from the axially parallel or coaxially extending pivot pin duct (220e) in the extension (220c).

10. A semi- trailer coupling according to any one of Claims 7 to 9, characterised in that the axially parallel contact surface (20d;220d) of the pivot pin (20;220) is sealed by a permanently elastic sealing compound (56;256) with respect to the radially outer circumferential surface (24c;270a) of the region (270) of the semi-trailer plate (210) near the lock or of the wearing ring (24).

11. A semi- trailer coupling according to Claim 6, characterised in that at the upper end (120a) of the pivot pin (120) a contact surface (120h) is formed which is substantially normal to its axis, and in that the semi-trailer plate or the wearing ring (124) has a contact surface (124g) which is substantially normal to its axis.

12. A semi- trailer coupling according to claim 11, characterised in that a transverse duct (124f), which discharges on to the contact surface (124g) of the trailer plate or of the wearing ring (124), branches off from the substantially radially extending connecting duct (124e).

13. A semi- trailer coupling according to either Claim 11 or Claim 12, characterised in that an inclined duct (120g), which discharges on to the contact surface (120h) of the pivot pin (120), branches off from the pivot pin duct (120e) in the upper end region (120a) of the pivot pin (120).

14. A semi- trailer coupling according to any one of Claims 11 to 13, characterised in that a seal (160) is clamped between the contact surface (120h) of the pivot pin (120), which is normal to the pivot pin axis, and the contact surface (124g) of the semi-trailer plate or of the wearing ring (124), which is substantially axially normal to the semi-trailer plate axis or wearing ring axis.

15. A semi- trailer coupling according to any one of Claims 11 to 14, characterised in that the pivot pin (20) has an extension (120c) which projects upwards above the axially normal contact surface (120h) and which with an antirotational surface (120d) abuts against an outer circumferential surface (124c) of the semi-trailer plate or the wearing ring (124).

16. A semi- trailer coupling according to any one of Claims 11 to 15, characterised in that the substantially radially extending connecting duct (124e) is extended up to a radially outer circumferential surface (124c) of the semi-trailer plate or the wearing ring (124) and is closed there by a closure member (158).

17. A semi- trailer coupling according to any one of Claims 4 to 16, characterised in that the wearing ring (24;124) is inserted into a radially inwardly and upwardly open annular recess (50;150) of the semi-trailer plate (10;110), abuts with a radially outer circumferential surface (24c;124c) against a radially inner circumferential surface of this annular recess (50;150), is supported with an axially normal supporting surface (24d;124d) on the bottom (50a;150a) of this annular recess (50;150), and in that an upper end portion (20a;120a) of the pivot pin (20;120) is recessed into a countersinking (52;152) in the bottom (50a;150a) of the annular recess (50;150) in such a way that at least one portion (20b;120b) of the upper pin end (20a;120a) situated within the contour of the wearing ring (24;124) lies substantially flush with the bottom surface (50a;150a) of the annular recess (50;150).

18. A semi- trailer coupling according to Claim 17, characterised in that an extension (20;120c) of the pivot pin (20;120,), which projects upwards above the abutment surface (24d;124d) of the wearing ring (24;124), is accommodated by a radial widening (53;153) in the circumferential wall of the annular recess (50;150).

19. A semi- trailer coupling according to any one of Claims 1 to 18, characterised in that a connector (54;154) for a central lubricating duct (30) and/or a forced-feed lubricator is provided at the lower end of the pivot pin (20;120).

20. A semi- trailer coupling according to any one of Claims 1 to 19, characterised in that the lubricant supply is part of a central lubricant supply (32) which also serves to supply the bearing surface (36) of the semi-trailer plate (10;110) with lubricant.

## Revendications

1. Sellette avec une alimentation de lubrifiant pour la zone de serrure (16) dans laquelle est prévue une surface d'application (24b ; 124b ; 210a) ouverte dans le sens contraire au sens de traction (Z), sur une plaque de sellette (10 ; 110 ; 210), pour un pivot central (14 ; 214) correspondant, un système de canaux de lubrifiant (28 ; 128 ; 228) menant à la surface d'application (24b ; 124b ; 210a),
caractérisée
en ce qu'au dessous de la surface d'application (24b ; 124b ; 210a) un crochet d'accouplement (18 ; 118 ; 218) est monté pivotant autour d'un axe de pivotement (20 ; 120 ; 220) et
en ce que le système de canaux de lubrifiant (28 ; 128 ; 228) mène, à travers l'axe de pivotement (20 ; 120 ; 220), à la surface d'application (24b ; 124b ; 210a).

2. Sellette selon la revendication 1,
caractérisée
en ce que le système de canaux de lubrifiant (28) est orienté de manière ciblée.

3. Sellette selon les revendications 1 ou 2,
caractérisée
en ce que la surface d'application (210a ; 310a) est directement formée sur la plaque de sellette (210 ; 310) et
en ce que le système de canaux de lubrifiant (228 ; 328) mène, au moins en partie à travers la plaque de sellette (210 ; 310) vers la surface d'application (210a ; 310a).

4. Sellette selon les revendications 1 ou 2,
caractérisée
en ce que la surface d'application (24b ; 124b) est formée sur un anneau d'usure (24 ; 124) inséré sur la plaque de surface d'application (10 ; 110) et
en ce que le système de canaux de lubrifiant (28 ; 128) mène, au moins en partie à travers l'anneau d'usure (24 ; 124), vers la surface d'application (24b ; 124b).

5. Sellette selon l'une des revendications 1 à 4,
caractérisée
en ce que le système de canaux de lubrifiant (28 ; 128 ; 228) mène à travers l'axe de pivotement (20 ; 120 ; 220), vers la plaque de surface d'application (210) ou vers l'anneau d'usure (24 ; 124) et de là, plus loin, vers la surface d'application (24b ; 124 ; 210a).

6. Sellette selon la revendication 5,
caractérisée
en ce que l'axe de pivotement (20 ; 120 ; 220) s'applique, dans la région de son extrémité supérieure (20a ; 120a ; 220a), contre la plaque de sellette (210) ou l'anneau d'usure (24 ; 124), dans au moins une paire de surfaces de contact (20d, 24c ; 120h, 124g ; 220d, 270a), en ce qu'un canal d'axe de pivotement (20e ; 120e, 120g ; 220e, 220i), s'étendant à l'intérieur de l'axe de pivotement (20 ; 120 ; 220), sensiblement parallèle à l'axe ou de manière coïncidante avec l'axe, débouche dans une surface de contact (20d ; 120h ; 220d), côté axe de pivotement et en ce qu'un canal de raccordement (24e ; 124e ; 124f ; 270b), s'étendant sensiblement radialement à travers la plaque de sellette (210) ou l'anneau d'usure (24 ; 124), débouche radialement à l'extérieur dans une surface de contact (24c ; 124g ; 270a), côté plaque de sellette ou côté anneau d'usure, de la paire de surfaces de contact (20d, 24c ; 120h, 124g ; 220d, 270a).

7. Sellette selon la revendication 6,
caractérisée
en ce que l'axe de pivotement (20 ; 220) possède, à son extrémité supérieure (20a ; 220a), un prolongement (20c ; 220c), qui forme une surface de contact (20d ; 220d) côté axe de pivotement, parallèle à l'axe géométrique de l'axe de pivotement et en ce que cette surface de contact (20d ; 220d), côté axe de pivotement, s'applique sur une partie d'une surface radialement extérieure (24c ; 270a) d'une zone (270) proche de la serrure de la plaque de sellette (210) ou d'une surface radialement extérieure de l'anneau d'usure (24), le canal d'axe de pivotement (20e ; 220e ; 220i), s'étendant parallèlement à l'axe ou de manière coïncidante avec l'axe, se poursuivant à l'intérieur du prolongement (20c ; 220c) et débouchant dans la surface de contact (20d ; 220d) parallèle à l'axe de l'axe de pivotement (20 ; 220), tandis que le canal de raccordement (24e ; 270b) s'étendant radialement débouche dans la surface périphérique (24c ; 270a) radialement extérieure de la zone proche de la serrure (270) de la plaque de sellette (210) ou de l'anneau d'usure (24).

8. Sellette selon la revendication 7,
caractérisée
en ce que le canal d'axe de pivotement (20e) s'étendant parallèle à l'axe ou de manière coïncidante avec l'axe coupe la surface de contact (20d) parallèle à l'axe géométrique de l'axe de pivotement (20).

9. Sellette selon la revendication 7,
caractérisée
en ce que du canal d'axe de pivotement (220e), s'étendant parallèle à l'axe ou de manière coïncidente avec l'axe, part, dans le prolongement (220c), un canal transversal, qui débouche dans la surface de contact (220d) parallèle à l'axe géométrique de l'axe de pivotement (220).

10. Sellette selon l'une des revendications 7 à 9,
caractérisée
en ce que la surface de contact (20d ; 220d) parallèle à l'axe géométrique de l'axe de pivotement (20 ; 220) est rendue étanche par une masse d'étanchéité (56 ; 256) élastique et permanente contre la surface périphérique (24c ; 270a) radialement extérieure de la zone proche de la serrure (270) de la plaque de sellette (210) ou de l'anneau d'usure (24).

11. Sellette selon la revendication 6,
caractérisée
en ce qu'à l'extrémité supérieure (120a) de l'axe de pivotement (120) est formée une surface de contact (120h) sensiblement normale à son axe et en ce que la plaque de sellette ou l'anneau d'usure (124) présente une surface de contact (124g) sensiblement normale à son axe.

12. Sellette selon la revendication 11,
caractérisée
en ce que du canal de raccordement (124e), s'étendant sensiblement radialement, part un canal transversal (124f), qui débouche dans la surface de contact (124g) de la plaque de sellette ou de l'anneau d'usure (124).

13. Sellette selon l'une des revendications 11 ou 12,
caractérisée
en ce que du canal d'axe de pivotement (120e), dans la zone d'extrémité supérieure (120a) de l'axe de pivotement (120), part un canal oblique (120g), qui débouche dans la surface de contact (120h) de l'axe de pivotement (120), sensiblement normale à l'axe de celui-ci.

14. Sellette selon l'une des revendications 11 à 13,
caractérisée
en ce qu'entre la surface de contact (120h) de l'axe de pivotement (120), normale à l'axe de celui-ci, et la surface de contact (124g) de la plaque de sellette ou de l'anneau d'usure, sensiblement normale à l'axe de la plaque de sellette ou de l'anneau d'usure, est serrée une garniture d'étanchéité (160).

15. Sellette selon l'une des revendications 11 à 14,
caractérisée
en ce que l'axe de pivotement (120) possède un prolongement (120c) dépassant vers le haut de la surface de contact (120h) normale à l'axe, lequel prolongement s'applique, par une surface de blocage en rotation (120d), contre une surface périphérique extérieure (124c) de la plaque de sellette ou de l'anneau d'usure (124).

16. Sellette selon l'une des revendications 11 à 15,
caractérisée
en ce que le canal de raccordement (124e), s'étendant sensiblement radialement, est prolongé jusqu'à une surface périphérique (124c) radialement extérieure de la plaque de sellette ou de l'anneau d'usure (124) et y est fermé par un élément de fermeture (158).

17. Sellette selon l'une des revendications 4 à 16,
caractérisée
en ce que l'anneau d'usure (24 ; 124) est placé dans un évidement annulaire (50 ; 150) ouvert radialement vers l'intérieur et vers le haut, de la plaque de sellette (10 ; 110), en ce qu'il s'applique par une surface périphérique (24c ; 124c) radialement extérieure contre une surface périphérique radialement intérieure de cet évidement annulaire (50 ; 150), en ce qu'il repose par une surface d'application (24d ; 124d) normale à l'axe sur le fond (50a ; 150a) de cet évidement annulaire (50 ; 150) et en ce qu'une portion d'extrémité supérieure (20a ; 120a) de l'axe de pivotement (20 ; 120) est encastrée dans un enfoncement (52 ; 152) du fond (50a ; 150a) de l'évidement annulaire (50 ; 150), de manière qu'au moins une partie (20b ; 120b), située à l'intérieur du contour de l'anneau d'usure (24 ; 124), de l'extrémité supérieure (20a ; 120a) de l'axe de pivotement, soit sensiblement dans le même plan que la surface de fond (50a ; 150a) de l'évidement annulaire (50 ; 150).

18. Sellette selon la revendication 17,
caractérisée
en ce qu'un prolongement (20c ; 120c) de l'axe de pivotement (20 ; 120), dépassant vers le haut de la surface d'application (24d ; 124d) de l'anneau d'usure (24 ; 124), est logé par un élargissement radial (53 ; 153) dans la paroi périphérique de l'évidement annulaire (50 ; 150).

19. Sellette selon l'une des revendications 1 à 18,
caractérisée
en ce qu'à l'extrémité inférieure de l'axe de pivotement (20 ; 120), est prévu un raccord (54 ; 154) pour une conduite de lubrification centrale (30) et/ou une presse de lubrifiant.

20. Sellette selon l'une des revendications 1 à 19,
caractérisée
en ce que l'alimentation de lubrifiant fait partie d'une alimentation de lubrifiant centrale (32), qui sert aussi à l'alimentation en lubrifiant de la surface d'appui (36) de la plaque de sellette (10 ; 110).
